# EUROPÄISCHE PATENTSCHRIFT

(11) **EP 1 271 746 B1**
(45) Veröffentlichungstag und Bekanntmachung des Hinweises auf die Patenterteilung: **26.04.2006**
(21) Anmeldenummer: 01890192.6
(22) Anmeldetag: 21.06.2001
(51) Int. Cl.: H02K 1/06

(54) **Stufenpolmotor**
Motor with stepped poles
Moteur à poles en palier

(43) Veröffentlichungstag der Anmeldung: 02.01.2003
(73) Patentinhaber: ATB Austria Antriebstechnik Aktiengesellschaft, 8724 Spielberg (Steiermark) (AT)
(72) Erfinder: Muhrer, Robert, 8724 Spielberg (AT); Karner, Wolfgang, 8720 Apfelberg (AT)
(74) Vertreter: Hehenberger, Reinhard

(56) Entgegenhaltungen:
- EP-A- 0 650 247
- EP-A- 0 913 909
- PATENT ABSTRACTS OF JAPAN vol. 1999, no. 09, 30. Juli 1999 (1999-07-30) & JP 11 103549 A (SANYO ELECTRIC CO LTD), 13. April 1999 (1999-04-13)
- PATENT ABSTRACTS OF JAPAN vol. 2000, no. 01, 31. Januar 2000 (2000-01-31) & JP 11 289726 A (NISSAN MOTOR CO LTD), 19. Oktober 1999 (1999-10-19)
- PATENT ABSTRACTS OF JAPAN vol. 016, no. 059 (E-1166), 14. Februar 1992 (1992-02-14) & JP 03 256543 A (MATSUSHITA SEIKO CO LTD), 15. November 1991 (1991-11-15)

## Beschreibung

Die Erfindung betrifft einen Stufenpolmotor mit einem Läufer und einem Ständer, wobei der Ständer aus einem Blechpaket aus einer Mehrzahl von Blechen besteht und wobei Bleche des Blechpaketes wenigstens eine Reihe von zwischen Nuten für die Ständerwicklung gebildeten, verkürzten Zähnen sowie Reihen von unverkürzten Zähnen bilden (US-A-4,940,912).

Aus der EP-A-650 247 und der Patent Abstracts of Japan Vol. 2000 No. 1 & JP-A-11 289 726 sind Elektromotoren mit einem Ständer aus einem Blechpaket aus einer Mehrzahl von Blechen bekannt, bei denen die Zähne der einzelnen Zahnreihen abwechselnd verkürzt und unverkürzt sind.

Bei Stufenpolmotoren handelt es sich um einen Motortyp kleinerer Leistung mit eher geringem Wirkungsgrad, dessen großer Vorteil darin liegt, dass er zur Erzeugung des erforderlichen Drehfeldes ohne zusätzliche Drosseln, Widerstände, Anlauf- oder Betriebskondensatoren od. dgl. auskommt. Um das Anlaufmoment zu erzeugen ist es erforderlich, das Drehfeld asymmetrisch auszuführen, was bei Stufenpolmotoren dadurch erfolgt, dass wenigstens eine der Zahnreihen, die zwischen den Nuten für die Ständerwicklung liegen, gegenüber den anderen Zahnreihen verkürzt ist, wodurch das Drehfeld in diesem Bereich deformiert wird.

Die Zähne zwischen den Nuten erfüllen u.a. zwei Funktionen: zum einen halten sie im Bereich der Nutenöffnungen sogenannte Deckschieber oder Nutverschlüsse, die über die Ständerwicklung geschoben werden, so dass diese einerseits vor Beschädigungen oder elektrischer Kontaktierung und anderseits gegen Herausfallen geschützt sind. Um die Nutverschlüsse besser zu halten, weisen sie an ihren freien, radial innen liegenden Enden häufig Verbreiterungen auf, wodurch die dazwischen liegenden Nuten an ihren innen liegenden Öffnungen, durch welche die Ständerwicklung eingeführt wird, noch weiter verengt ist.

Zum zweiten üben die Zähne eine Stützwirkung für die sogenannten Einziehlamellen auf, welche für das Herstellen und Einziehen der Ständerwicklung in die Nuten erforderlich sind. Es ist dabei je Zahn eine Stützlamelle vorgesehen, die beim Einziehen der Ständerwicklung auf dem zugeordneten Zahn aufliegt und durch diesen gestützt wird, wenn die Ständerwicklung durch den Einziehstern mit relativ großer Kraft durch die verengten Nutenöffnungen in die Nuten eingezogen wird.

Wenn nun eine Zahnreihe des Stufenpolmotors verkürzt ist, fällt dessen Stützwirkung sowohl für den Nutverschluss als auch für die Stützlamelle weg, so dass sich erhebliche fertigungstechnische Probleme ergeben, insbesondere wenn nicht nur eine Zahnreihe, sondern zwei oder mehr nebeneinanderliegende Zahnreihen verkürzt sind.

Der Erfindung liegt daher die Aufgabe zugrunde, einen Stufenpolmotor der eingangs genannten Gattung zur Verfügung zu stellen, der die erwähnten Nachteile weitgehend vermeidet.

Gelöst wird diese Aufgabe mit einem Stufenpolmotor mit den Merkmalen des Anspruches 1.

Der Ständer eines Elektromotors besteht üblicherweise aus einem Blechpaket aus einer Mehrzahl von Blechen. Wenn man nun bei wenigstens einem Blech bei einer Reihe mit verkürzten Zahnen diesen Zahn unverkürzt lässt, dann werden sowohl der Nutverschluss als auch die Stützlamelle im Bereich dieses Zahnes von dem wenigstens einen unverkürzten Blechzahn gehalten bzw. unterstützt. Auf der anderen Seite wirkt sich dieses einzelne Blech mit dem unverkürzten Zahn elektromagnetisch kaum aus, so dass die gewünschte Wirkung der verkürzten Zahnreihe weitgehend unbeeinflusst bleibt bzw. ohne weiteres kompensiert werden kann.

Bei der Erfindung sind wenigstens zwei Bleche mit unverkürzten Zähnen vorgesehen und diese Bleche sind im Bereich der Stirnenden des Blechpaketes angeordnet.

Dies bringt den Vorteil mit sich, dass der Nutverschluss an zwei Stellen von unverkürzten Zähnen gehalten wird und dass die Einziehlamellen an den Stirnenden des Blechpaketes, wo die Belastung beim Einziehen der Ständerwicklung am größten ist, von jeweils einem Blech mit einem unverkürzten Zahn unterstützt werden.

Wie erwähnt, wird durch das Verkürzen wenigstens einer Zahnreihe das Drehfeld des Elektromotors deformiert, wodurch ein Anlaufmoment erzeugt werden kann. Das Anlaufmoment kann u.a. dadurch beeinflusst werden, dass mehrere Zahnreihen, beispielsweise drei, vier oder fünf Zahnreihen von zwölf Zahnreihen je Pol verkürzt werden, wobei gemäß der Erfindung je Reihe mit verkürztem Zahn bei wenigstens zwei Blechen ein unverkürzter Zahn vorgesehen ist. Die wenigstens zwei Bleche mit unverkürzten Zähnen sind im Bereich der Stirnenden des Blechpaketes angeordnet.

Die besonders einfach herstellbare Anordnung des Stufenpolmotors ergibt sich durch, daß jeweils ein Blech im Bereich der Stirnenden des Blechpaketes vorgesehen ist, das überhaupt keine verkürzten Zähne aufweist. Es müssen dann bei der Herstellung des Stufenpolmotors nur zwei Arten von Blechen hergestellt werden, nämlich solche mit verkürzten Zähnen und solche, bei denen überhaupt keine verkürzten Zähne vorgesehen sind, die dann den jeweiligen Anforderungen entsprechend in der gewünschten Anzahl bzw. Reihenfolge zu einem Blechpaket miteinander verbunden werden.

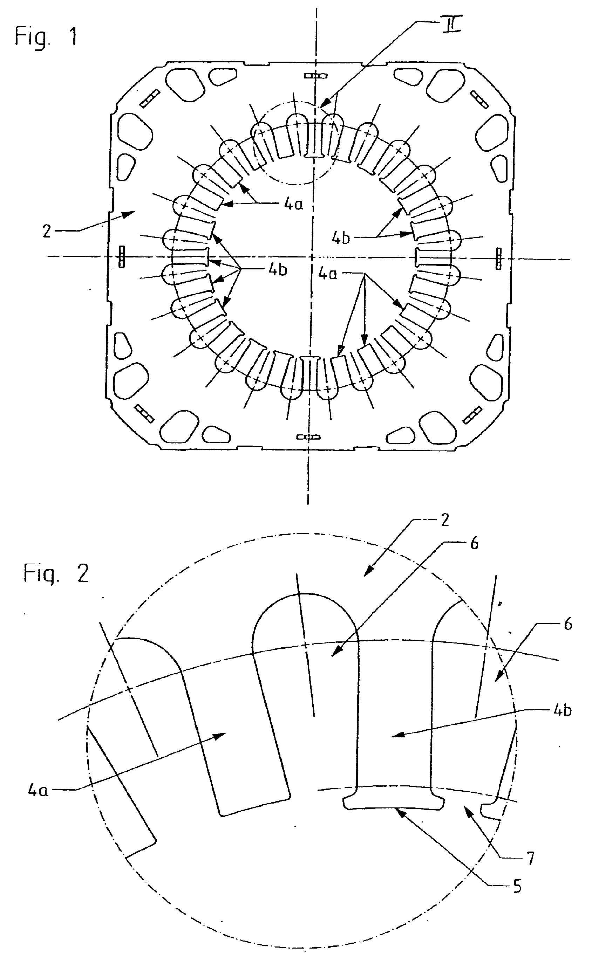

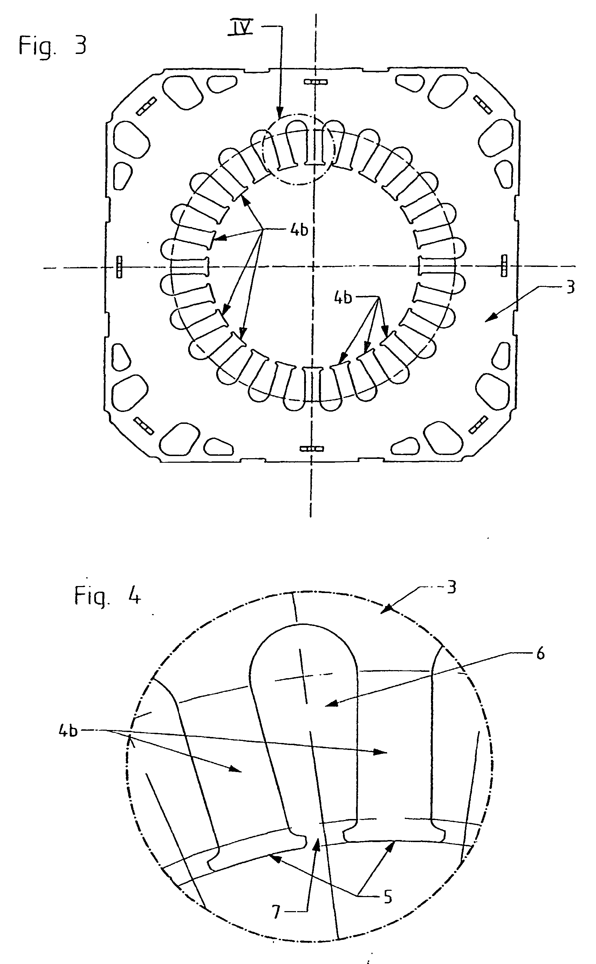

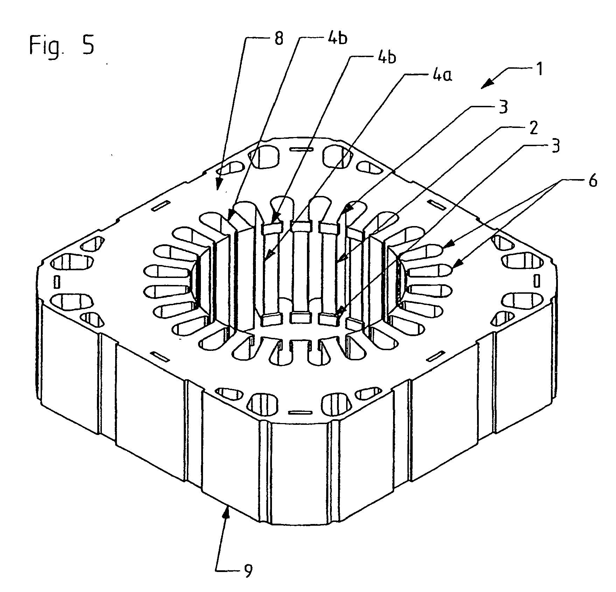

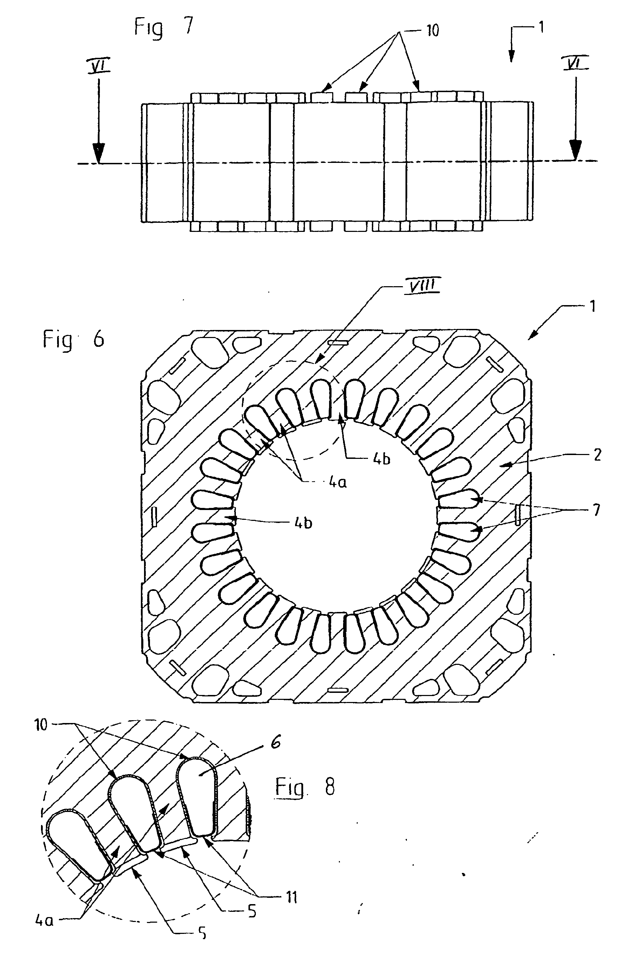

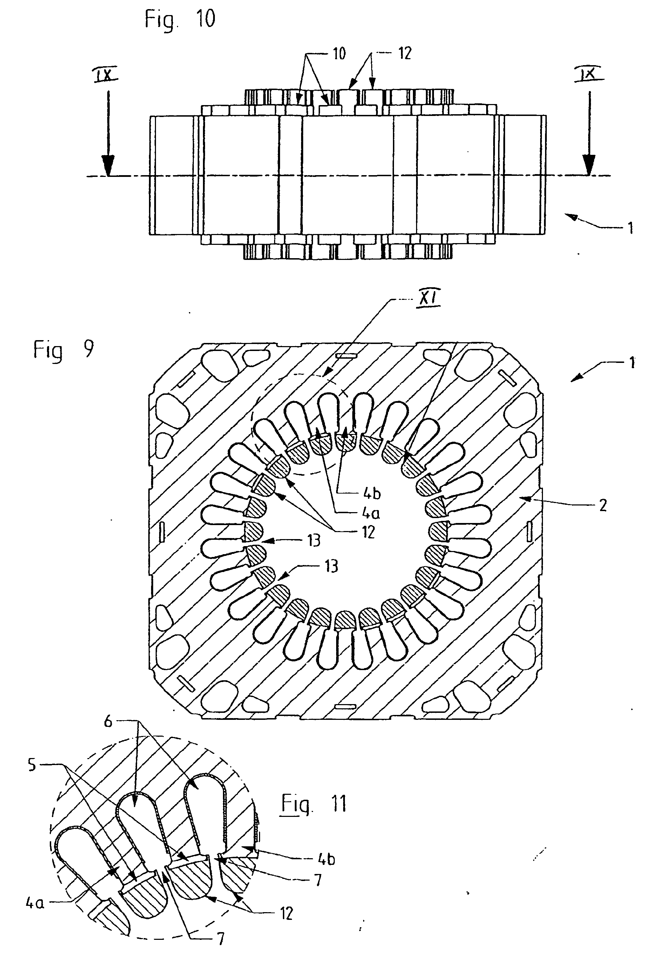

Weitere Merkmale und Vorteile der Erfindung ergeben sich aus der nachfolgenden Beschreibung eines Ausführungsbeispieles der Erfindung unter Bezugnahme auf die Zeichnungen. Es zeigt: Fig. 1 ein Blech, teilweise mit verkürzten Zähnen, Fig. 2 das Detail II von Fig. 1 in vergrößertem Maßstab, Fig. 3 ein Blech mit unverkürzten Zähnen, Fig. 4 das Detail IV von Fig. 3 in vergrößertem Maßstab, Fig. 5 eine Schrägansicht auf ein Blechpaket aus Blechen mit sowohl verkürzten als auch unverkürzten Zähnen, Fig. 6 einen Schnitt durch ein Blechpaket mit eingesetzten Nutisolationen und Nutverschlüssen, Fig. 7 eine Aufrissansicht des Blechpaketes von Fig. 6, Fig. 8 das Detail VIII von Fig. 6 in vergrößertem Maßstab, Fig. 9 einen Schnitt durch ein Blechpaket mit eingesetzten Nutisolationen und angesetzten Einziehlamellen, Fig. 10 eine Aufrissansicht des Blechpaketes von Fig. 9 und Fig. 11 das Detail XI in Fig. 9 in vergrößertem Maßstab.

In Fig. 5 ist ein Blechpaket 1 des Ständers eines Stufenpolmotors dargestellt, das aus Blechen 2 und 3 zusammengesetzt ist, die in den Fig. 1 bis 4 näher dargestellt sind.

Im Detail handelt es sich bei den Blechen 2, 3 um Bleche mit je 24 Zähnen 4a und 4b, wobei bei den Blechen 2 zweimal vier Zähne 4a verkürzt sind und die übrigen zweimal acht Zähne 4b unverkürzt sind. Im Detail ist in Fig. 2 zu sehen, dass die Zähne 4b an ihren freien, radial innen liegenden Enden 5 eine Verbreiterung aufweisen. Dadurch werden die zwischen den Zähnen 4 angeordneten Nuten 6, die bereits eine sich radial nach innen verengende Form aufweisen, im Bereich der Nutöffnung 7 weiter verengt. Da die Zähne 4a verkürzt sind, fehlt bei diesen das verbreiterte Ende 5.

In den Fig. 3 und 4 ist ein Blech 3 dargestellt, das nur unverkürzte Zähne 4b aufweist.

Wie Fig. 5 zeigt, sind beim Blechpaket 1 in der Mitte eine bestimmte Anzahl von Blechen 2, die verkürzte Zähne 4a und unverkürzte Zähne 4b aufweisen, angeordnet und an den Stirnseiten 8 und 9 z.B. je zwei oder drei Bleche 3, die ausschließlich unverkürzte Zähne 4b aufweisen.

In den Fig. 6 bis 8 ist ein Blechpaket 1 dargestellt, bei dem in die Nuten 7 Nutisolierungen 10 und Nutverschlüsse 11 eingesetzt sind. Die Ständerwicklung ist nicht dargestellt. Insbesondere in Fig. 8 ist ersichtlich, dass der Nutverschluss 11 zwischen zwei verkürzten Zähnen 4a relativ leicht herausfallen könnte, wenn die Verbreiterungen 5 zur Gänze fehlen würden. Da allerdings an den Blechen 3 an den Stirnseiten 8, 9 unverkürzte Zähne 4b mit Verbreiterungen 5 vorgesehen sind, werden die Nutverschlüsse 11 von diesen Zähnen 4b im Randbereich gehalten.

In den Fig. 9 bis 11 wiederum ist ein Blechpaket, teilweise im Schnitt, dargestellt, bei dem in die Nuten 7 nur die Nutisolierungen 10 eingesetzt sind und an den Zähnen 4a, 4b Einziehlamellen 12 angesetzt sind. Durch die zwischen den Einziehlamellen 12 gebildeten Schlitze 13 wird die nicht dargestellte Ständerwicklung durch die Nutöffnungen 7 in die Nuten 6 eingezogen. Die Einziehlamellen 12 sind dabei einer relativ hohen Belastung ausgesetzt, da die Nutöffnungen 7 und somit auch die Schlitze 13 zwischen den Einziehlamellen 12 relativ schmal sind. Es ist daher erforderlich, dass die Einziehlamellen 12 sehr gut auf den Zähnen 4 aufsitzen, um ein Verbiegen der Einziehlamellen 12 einerseits und eine Beschädigung der Ständerwicklung anderseits zu vermeiden.

Wenn bei einem Stufenpolmotor nun alle Bleche im Bereich von Zähnen 4a verkürzt wären, dann würden die Einziehlamellen 12 entweder von den Zähnen 4a nicht unterstützt oder es müssten für die verkürzten Zähne 4a besonders geformte bzw. hergestellte Einziehlamellen vorgesehen sein, was die Werkzeugkosten für die Herstellung eines Stufenpolmotors nicht unerheblich erhöhen würde. Da allerdings, wie bereits erwähnt, die Belastung der Einziehlamellen 12 im Bereich der Stirnflächen 8 und 9 des Blechpaketes 1 am größten ist und die Einziehlamellen 12 im Bereich der Stirnenden 8, 9 von unverkürzten Zähnen 4b bzw. deren verbreiterten Enden 5 unterstützt werden, besteht die erwähnte Gefahr von Verbiegungen der Einziehlamellen 12 bzw. von Beschädigungen der Ständerwicklung nicht und es ist auch keine besondere Anfertigung von Werkzeugen erforderlich.

Es versteht sich, dass die Anzahl und Position von Blechen 3 mit ausschließlich unverkürzten Zähnen 4b innerhalb des Blechpaketes 1 den jeweiligen Bedürfnissen angepasst werden kann. So können zusätzlich ein oder mehrere zu Blechen 3 im Bereich jeder Stirnfläche 8, 9 zusätzlich Bleche 3 im Mittelbereich des Blechpaketes 1 vorgesehen sein.

## Patentansprüche

1. Stufenpolmotor mit einem Läufer und einem Ständer, wobei der Ständer aus einem Blechpaket (1) aus einer Mehrzahl von Blechen (2, 3) besteht und wobei Bleche (2) des Blechpaketes (1) wenigstens eine Reihe von zwischen Nuten (6) für die Ständerwicklung gebildeten, verkürzten Zähnen (4a) sowie Reihen von unverkürzten Zähnen (4b) bilden, **dadurch gekennzeichnet, dass** wenigstens zwei Bleche (3) mit unverkürzten Zähnen (4b) vorgesehen sind und dass diese Bleche (3) im Bereich der Stirnenden (8, 9) des Blechpaketes (1) angeordnet sind.

2. Stufenpolmotor nach Anspruch 1, **dadurch gekennzeichnet, dass** wenigstens ein Blech (3) mit unverkürzten Zähnen (4b) im Mittelbereich des Blechpakets (1) angeordnet ist.

3. Stufenpolmotor nach Anspruch 1 oder 2, **dadurch gekennzeichnet, dass** die unverkürzten Zähne (4b) im Bereich ihrer radial nach innen ragenden freien Enden (5) eine Verbreiterung aufweisen.

## Claims

1. Stepped pole motor, having a rotor and a stator, the stator comprising a bundle of laminations (1) made of a plurality of metal sheets (2, 3) and metal sheets (2) of the bundle of laminations (1) forming at least one row of shortened teeth (4a), which are formed between grooves (6) for the stator winding, and rows of unshortened teeth (4b), **characterised in that** at least two metal sheets (3) with unshortened teeth (4b) are provided and **in that** these metal sheets (3) are disposed in the region of the front ends (8, 9) of the bundle of laminations (1).

2. Stepped pole motor according to claim 1, **characterised in that** at least one metal sheet (3) with unshortened teeth (4b) is disposed in the central region of the bundle of laminations (1).

3. Stepped pole motor according to claim 1 or 2, **characterised in that** the unshortened teeth (4b) have a widening in the region of their radially inwardly protruding free ends (5).

## Revendications

1. Moteur à plusieurs pôles et vitesses avec un rotor et un stator, le stator étant constitué par un empilage de tôles (1) comportant plusieurs tôles (2, 3), les tôles (2) de l'empilage de tôles formant au moins une rangée de dents raccourcies (4a), formées entre des encoches pour l'enroulement statorique, ainsi que des rangées de dents non raccourcies (4b), **caractérisé en ce que** deux tôles (3) au moins avec des dents non raccourcies (4b) sont prévues et que ces tôles (3) sont disposées au niveau des faces terminales (8, 9) de l'empilage de tôles (1).

2. Moteur à plusieurs pôles et vitesses selon la revendication 1, **caractérisé en ce qu'**une tôle (3) au moins avec des dents non raccourcies (4b) est disposée dans la zone centrale de l'empilage de tôles (1).

3. Moteur à plusieurs pôles et vitesses selon les revendications 1 ou 2, **caractérisé en ce que** les dents non raccourcies (4b) présentent un élargissement dans la zone de leurs extrémités libres (5) faisant saillie radialement vers l'intérieur.
